# EUROPEAN PATENT SPECIFICATION

(11) **EP 4 266 467 B1**
(45) Date of publication and mention of the grant of the patent: **29.10.2025**
(21) Application number: 22861692.6
(22) Date of filing: 23.08.2022
(51) Int. Cl.: H01M 50/242, H01M 50/211

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 25.08.2021 KR 20210112408
(43) Date of publication of application: 25.10.2023
(73) Proprietor: LG Energy Solution, Ltd., Seoul 07335 (KR)
(72) Inventor: CHOI, Giyoung, Daejeon 34122 (KR); LEE, Suhang, Daejeon 34122 (KR); KIM, Yongil, Daejeon 34122 (KR); KIM, Dongwook, Daejeon 34122 (KR)
(74) Representative: Goddar, Heinz J.
(86) International application number: PCT/KR2022/012605
(87) International publication number: WO 2023/027483

(56) References cited:
- CN-U- 205 609 622
- CN-U- 205 609 622
- CN-U- 209 709 051
- DE-A1- 102019 007 363
- DE-A1- 102019 205 777
- KR-A- 20190 126 528
- KR-A- 20210 000 547
- KR-B1- 101 181 849
- US-A1- 2019 363 392
- US-B2- 11 005 122

## Description

### [TECHNICAL FIELD]

### Cross Citation with Related Application(s)

This application claims the benefit of Korean Patent Application No. 10-2021-0112408 filed on August 25, 2021 with the Korean Intellectual Property Office.

The present disclosure relates to a battery module and a battery pack including the same, and more particularly, to a battery module having enhanced safety and a battery pack including the same.

### [BACKGROUND]

Along with the technology development and increased demand for mobile devices, the demand for secondary batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, in order to protect the battery cell stack from external impact, heat or vibration, the battery module may include a module frame which is opened in its front and rear surfaces and houses the battery cell stack in an internal space.

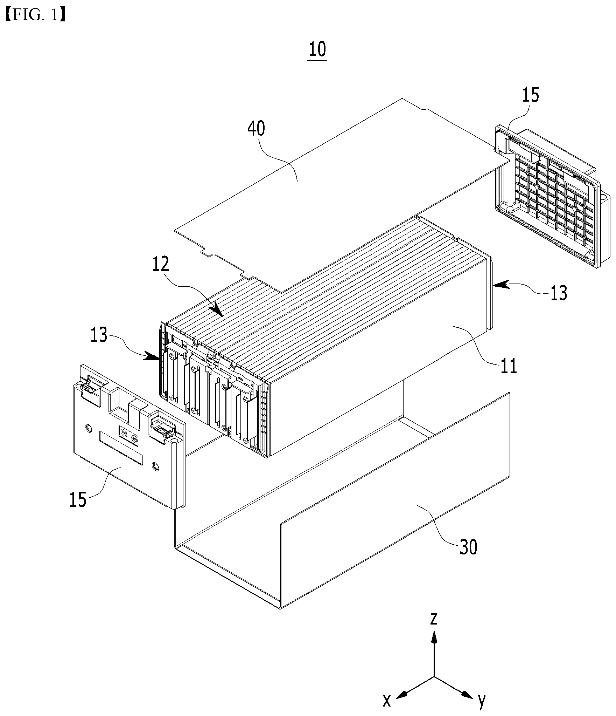

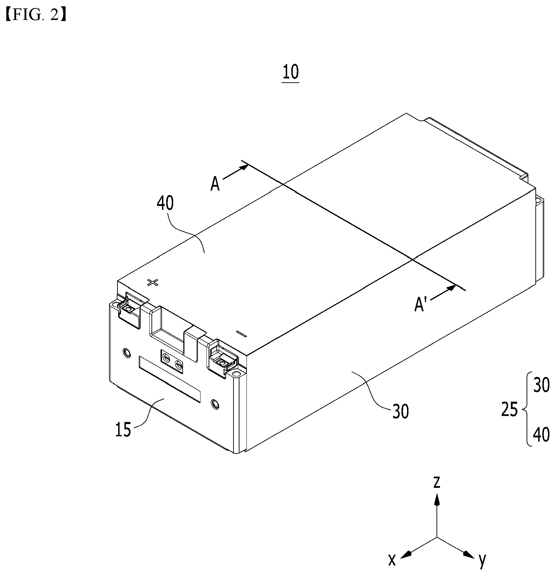

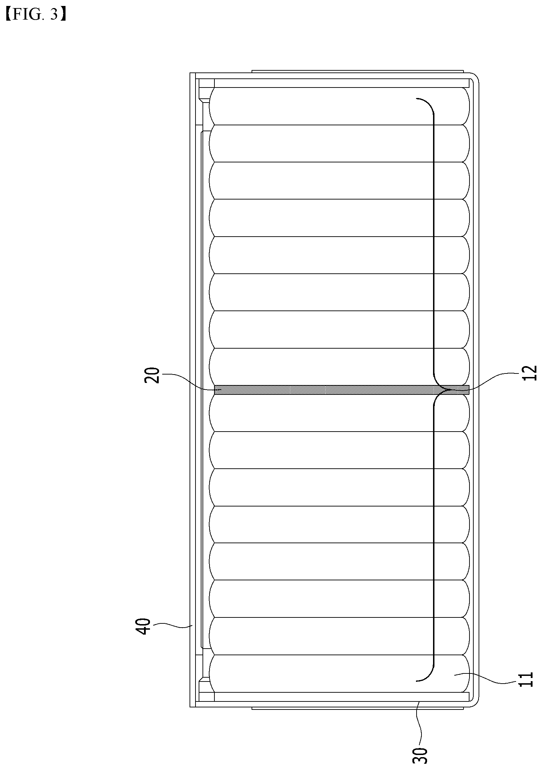

Fig. 1 is an exploded perspective view of a conventional battery module. Fig. 2 is a perspective view which shows a state in which components constituting the battery module of Fig. 1 are combined. Fig. 3 is a cross-sectional view taken along the cutting line A-A' of Fig. 2.

Referring to Figs. 1 to 3, a conventional battery module 10 includes a battery cell stack 12 in which a plurality of battery cells 11 are stacked in one direction, a module frame 25 that houses battery cell stack 12 and end plates 15 that cover the front and rear surfaces of the battery cell stack 12. At this time, the module frame 25 includes a lower frame 30 that covers a lower part and both side surfaces of the battery cell stack 12, and an upper plate 40 that covers the upper surface of the battery cell stack 12. In addition, a busbar assembly 13 may be formed between the battery cell stack 12 and the end plate 15.

Further, as shown in Fig. 3, a compression pad 20 is positioned between a pair of battery cells adjacent to each other in the battery cell stack 12. Referring to Figs. 2 and 3, the compression pad 20 contained in the conventional battery module 10 may contact one surface of the battery cell 11.

When the battery cell 11 is swollen, the battery cell stack 12 may apply stress to the lower frame 30 and the upper plate 40, which may reduce module rigidity and thus makes it difficult to secure the stability of the battery module. At this time, the compression pad 20 can partially absorb a swelling phenomenon, but the compression pad 20 alone has a limit in controlling a large amount of swelling that occurs during charging/discharging processes. Further, the thickness difference and clearance of the battery cell 11 may occur, or portions that are not pressurized may occur, so that in case of battery module that needs to secure initial pressing force, it is difficult to maintain the initial pressing force by the compression pad 20 alone. In particular, in the case of a battery cell made of pure silicon (Si) or an all-solid-state battery cell, it is necessary to maintain a certain pressing force even at the initial stage, and during the charging/discharging processes, a large amount of swelling occurs compared to conventional battery cells. Thus, a structure that can properly control this is required, and securement of module rigidity is required by forming an additional structure to minimize swelling.

Therefore, there is a need to develop a battery module and a battery pack that have an initial pressing force unlike the conventional ones and can absorb a large amount of swelling that occurs during charging and discharging, thereby enabling control of the internal pressure. Battery modules are also known from the following publications: CN 205 609 622 U, US 2019/363392 A1, US 11 005 122 B2, DE 10 2019 205777 A1 or DE 10 2019 007363 A1.

### [DETAILED DESCRIPTION OF THE INVENTION]

### [Technical Problem]

It is an object of the present disclosure to provide a battery module capable of maintaining initial pressing force and absorbing a large amount of cell swelling, and a battery pack including the same.

### [Technical Solution]

According to one embodiment of the present disclosure, there is provided a battery module comprising: a battery cell stack in which a plurality of battery cells are stacked; a module frame that houses the battery cell stack; and a sliding plate that is arranged between battery cells adjacent to each other among the plurality of battery cells.

The sliding plate includes a first sliding plate and a second sliding plate, and the first sliding plate and the second sliding plate may be formed so as to be spaced apart from each other between the battery cells adjacent to each other.

The battery module includes a connection member formed between the first sliding plate and the second sliding plate, wherein the connection member may connect the first sliding plate and the second sliding plate.
the connection member may include a spring member.

The connection member may be formed in plural numbers between the first sliding plate and the second sliding plate.

The battery module includes shaft members formed at an upper part and a lower part of the battery cell stack, wherein the shaft member may be connected to an end part of the sliding plate.

The module frame includes a frame member that covers a lower part and both side surfaces of the battery cell stack, and an upper plate that covers an upper part of the battery cell stack, and the shaft member may be formed in parallel with the upper plate.

The shaft member is formed in plural numbers, the shaft member is fixedly installed on each side surface part of the frame member, and the shaft member may be connected to each of the first sliding plate and the second sliding plate.

The shaft member may include a first shaft member connected to the first sliding plate and a second shaft member connected to the second sliding plate.

The first shaft member may include a 1-1th shaft member connected to an upper end part of the first sliding plate and a1-2th shaft member connected to a lower end part of the first sliding plate, and the second shaft member may include a 2-1th shaft member connected to an upper end part of the second sliding plate and a 2-2th shaft member connected to a lower end part of the second sliding plate.

The battery module according to another embodiment of the present disclosure may include a mounting part formed on a side surface part of the module frame.

The mounting part may be formed along the longitudinal direction of the battery cell.

According to yet another embodiment of the present disclosure, there is provided a battery pack comprising the above-mentioned battery module.

### [ADVANTAGEOUS EFFECTS]

According to embodiments of the present disclosure, it is possible to maintain the initial pressing force and control the swelling phenomenon caused by charge and discharge through the structure of the sliding plate and the connection member interposed between a pair of battery cells adjacent to each other.

In particular, it is possible to control pressure changes caused by cell swelling through the sliding plate, the connection member, and the shaft member.

Moreover, it is possible to suppress the occurrence of swelling through the mounting part formed on the module frame.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a conventional battery module;
Fig. 2 is a perspective view which shows a state in which components constituting the battery module of Fig. 1 are combined;
Fig. 3 is a cross-sectional view taken along the cutting line A-A' of Fig. 2;
Fig. 4 is a perspective view of the battery module of the present disclosure;
Fig. 5 is a cross-sectional view taken in parallel with the xz plane along the cutting line B-B' of Fig. 4, which is a cross-sectional view of a battery module according to one embodiment of the present disclosure;
Fig. 6 is a cross-sectional view of a battery module according to another embodiment of the present disclosure;
Fig. 7 is a perspective view which shows one battery cell included in the battery cell stack of Figs. 5 and 6; and
Fig. 8 is an exploded perspective view of a battery pack according to yet another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and areas are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

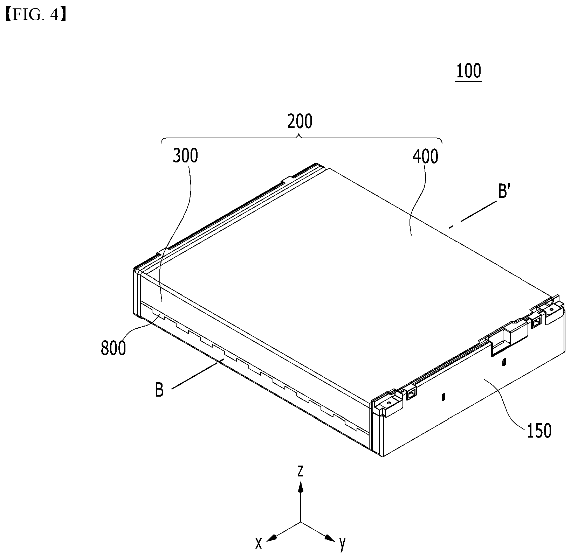

Now, a battery module according to one embodiment of the present disclosure will be described with reference to Figs. 4, 5 and 7.

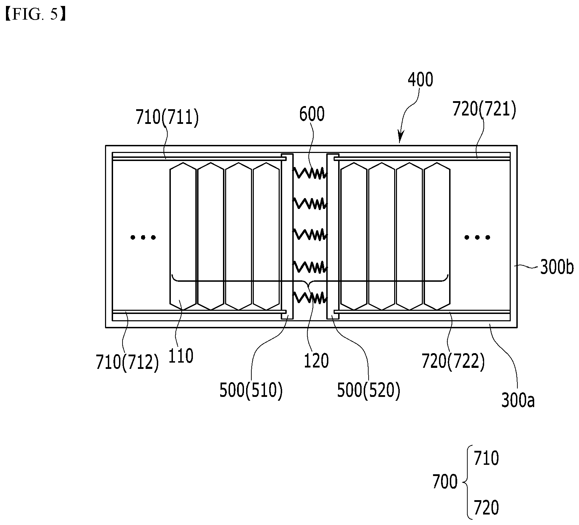

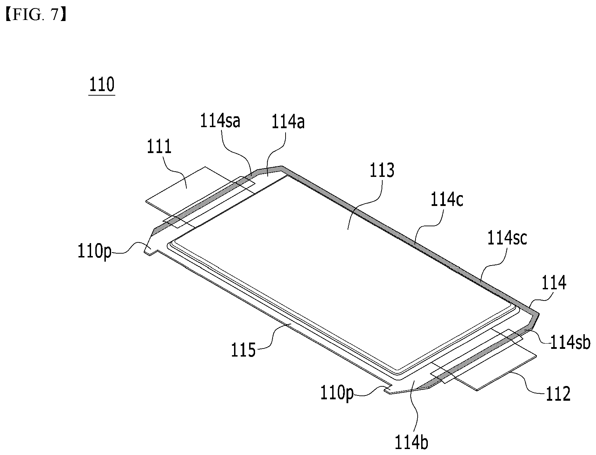

Fig. 4 is a perspective view of the battery module of the present disclosure. Fig. 5 is a cross-sectional view taken in parallel with the xz plane along the cutting line B-B' of Fig. 4, which is a cross-sectional view of a battery module according to one embodiment of the present disclosure. Fig. 7 is a perspective view which shows one battery cell included in the battery cell stack of Fig. 5.

Referring to Figs. 4 and 5, the battery module 100 according to the present embodiment includes a battery cell stack 120 in which a plurality of battery cells 110 are stacked, a module frame 200 that houses the battery cell stack 120, and end plates 150 that cover the front and rear surfaces of the battery cell stack 120.

The battery cell 110 is preferably a pouch-type battery cell. For example, referring to Fig. 7, the battery cell 110 according to the present embodiment has a structure in which two electrode leads 111 and 112 face each other and protrude from one end 114a and the other end 114b of the cell main body 113, respectively. The battery cell 110 can be manufactured by joining both end parts 114a and 114b of the cell case 114 and both side surfaces 114c connecting them, in a state in which the electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be formed of a connection part 115. Between both ends 114a and 114b of the battery case 114 may be defined as the longitudinal direction of the battery cell 110, and between the one side part 114c and the connection part 115 connecting both ends 114a and 114b of the battery case 114 may be defined as the width direction of the battery cell 110.

The connection part 115 may extend long along one edge of the battery cell 110, and a protrusion part 110p of the battery cell 110 may be formed at an end part of the connection part 115. The protrusion part 110p may be formed on at least one of both end parts of the connection part 115, and may protrude in a direction perpendicular to the direction in which the connection part 115 extends. The protrusion part 110p may be positioned between one of the sealing parts 114sa and 114sb of both end parts 114a and 114b of the battery case 114 and the connection part 115.

The battery case 114 generally has a laminated structure of resin layer/metal thin film layer/resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the battery case to form a battery cell stack 120.

The module frame 200 includes a frame member 300 that is opened in the upper surface, the front surface, and the rear surface thereof and covers the lower part and both side parts of the battery cell stack 120, and an upper plate 400 that covers the upper part of the battery cell stack 120. However, the module frame 200 is not limited thereto, and can be replaced with a frame having another shape such as an L-shaped frame or a mono-frame surrounding the cell assembly 120 except the front and rear surfaces. The cell assembly 120 housed inside the module frame 200 can be physically protected through the module frame 200. At this time, the frame member 300 may include a bottom part 300a that supports the lower part of the cell assembly 120, and side surface parts 300b each extending upward from both ends of the frame bottom part 300a.

The upper plate 400 may cover the opened upper side surface of the module frame 200. The end plate 150 can cover the front and rear surfaces of the cell assembly 120 that are opened in the module frame 200. The end plate 150 can be weld-coupled with the front and rear edges of the upper plate 400 and the front and rear edges of the module frame 200.

Conventional battery modules have attempted to absorb cell swelling by including a compression pad interposed between the battery cells. However, in the case of a battery cell and an all-solid-state battery cell containing pure silicon (Si) with a very larger degree of cell swelling, there was a limit to the absorption of cell swelling by the conventional compression pad alone. In particular, the battery cell also needs to maintain a constant initial pressing force, but there is a limit to the formation of the initial pressing force by the conventional compression pad alone.

Therefore, referring to Fig. 5, the battery module 100 according to the present embodiment includes a sliding plate 500 that is arranged between battery cells 110 adjacent to each other among a plurality of battery cells 110. At this time, the sliding plate 500 may include a first sliding plate 510 and a second sliding plate 520, wherein the first sliding plate 510 and the second sliding plate 520 may be formed so as to be spaced apart from each other between battery cells 110 adjacent to each other.

The battery module according to the present embodiment may include a connection member 600 formed between the first sliding plate 510 and the second sliding plate 520. At this time, the connection member 600 may be selected without limitation in a range that does not limit the movement of the sliding plate 500, and specifically, the connection member 600 may include a spring member. The connection member 600 may connect the first sliding plate 510 and the second sliding plate 520.

At this time, the connection member 600 can be formed between the first sliding plate 510 and the second sliding plate 520, thereby forming an initial pressing force. In particular, the connection member 600 is compressed when cell swelling occurs to enable movement of the first sliding plate 510 and the second sliding plate 520, thereby achieving the effect of controlling pressure by cell swelling.

Therefore, at least one connection member 600 may be formed between the first sliding plate 510 and the second sliding plate 520. More specifically, by forming a plurality of connection members, it is possible to achieve the effect of maintaining the initial pressing force and absorbing the cell swelling due to the elastic force of the connection member 600.

Meanwhile, in order to maintain the initial pressing force, a fixing member may be formed together with the connection member 600, and the fixing member may be removed after fixing the position of the connection member 600 in order to form an initial pressing force.

Meanwhile, the battery module 100 according to the present embodiment may include shaft members 700 formed at an upper part and a lower part of the battery cell stack 120. In particular, the shaft member 700 may be connected to the end part of the sliding plate 500. At this time, for the connection, a hole is formed in the sliding plate 500 to insert and fix the shaft member 700 through the hole, or an adhesive member can be further formed between the sliding plate 500 and the shaft member 700. In addition, the sliding plate 500 and the shaft member 700 may be connected in various ways without being limited to the above method.

Meanwhile, when the shaft member 700 is formed in the battery module 100 according to the present embodiment, the shaft member 700 may be formed in parallel with the upper plate 400. Specifically, referring to Figs. 4 and 5, the shaft member 700 may be formed along the x-axis and -x-axis directions, which are the stacking directions of the battery cells, and it can be formed in parallel with the upper plate 400 while being formed along the above directions.

Further, the shaft member 700 may be formed in plural numbers, the shaft member 700 is fixedly installed on each side surface part 300b of the frame member, and the shaft member 700 may be connected to the first sliding plate 510 and the second sliding plate 520, respectively.

That is, referring to Fig. 5, the shaft member 700 may include a first shaft member 710 connected to the first sliding plate 510 and a second shaft member 720 connected to the second sliding plate 520. At this time, the first shaft member 710 may include a 1-1th shaft member 711 connected to an upper end part of the first sliding plate 510 and a 1-2th shaft member 712 connected to a lower end part of the first sliding plate 510. In addition, the second shaft member 720 may include a 2-1th shaft member 721 connected to an upper end of the second sliding plate 520 and a 2-2th shaft member 722 connected to a lower end of the second sliding plate 520. Therefore, the shaft member 700 may be formed at both end parts of the sliding plate 500, and during cell swelling, the sliding plate 500 can move smoothly without being biased in one direction.

When swelling of the battery cell 110 occurs on the battery module 100 according to the present embodiment, the battery cells 110 adjacent to the sliding plate 500 can apply pressure to the sliding plate 500. At this time, the connection member 600 positioned between the sliding plates 500 may be compressed by the pressure. The sliding plate 500 moves in the direction of the connection member 600 by the compression, and at the same time, the shaft member 700 connected to the sliding plate 500 may extend along with the movement of the sliding plate 500.

Therefore, the connection member 600 is compressed by the pressure applied to the sliding plate 500, thereby absorbing the cell swelling, and at the same time, by moving the sliding plate 500 and extending the shaft member 700, it may be possible to control the pressure by swelling. Further, the cell swelling phenomenon is minimized and the absorption effect of the swelling is increased, so that the stability of the battery module can be improved.

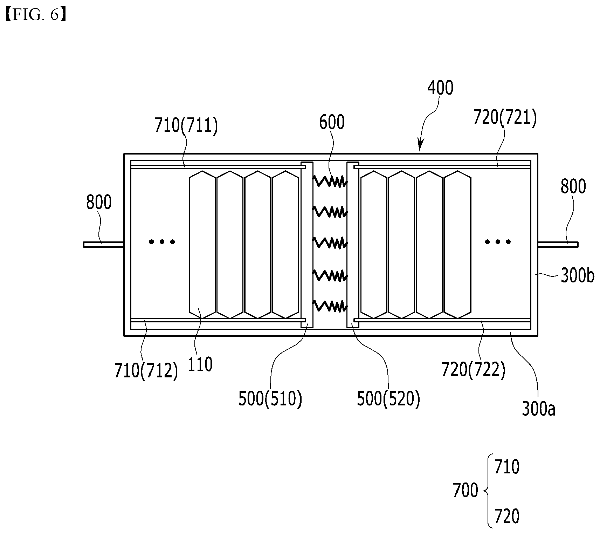

Next, a battery module according to another embodiment of the present disclosure will be described with reference to Fig. 6. At this time, since there are contents overlapping with those described above, only the portions that differ from the content described above will be described.

Fig. 6 is a cross-sectional view of a battery module according to another embodiment of the present disclosure.

Referring to Fig. 6, the battery module according to the present embodiment may include a mounting part 800 formed on the side surface part of the module frame 200. Specifically, the mounting part 800 may be formed on the side surface part 300b of the frame member 300.

At this time, referring to Fig. 6, the mounting part 800 may be formed on the side surface part 300b along the y-axis and -y-axis directions that are the longitudinal directions of the battery cell 110. That is, the mounting part 800 may be formed in the direction of cell swelling that occurs along the longitudinal direction of the battery cell 110. Further, the mounting part 800 may be formed so as to have a shape that repeats protrusions and recesses from the side surface part 300b.

By forming the mounting part 800 as described above, it is possible to achieve the effect of minimizing the possibility of deformation of the module frame 200 due to cell swelling. In particular, the mounting part 800 formed along the cell swelling direction can achieve the effect of suppressing the occurrence of cell swelling.

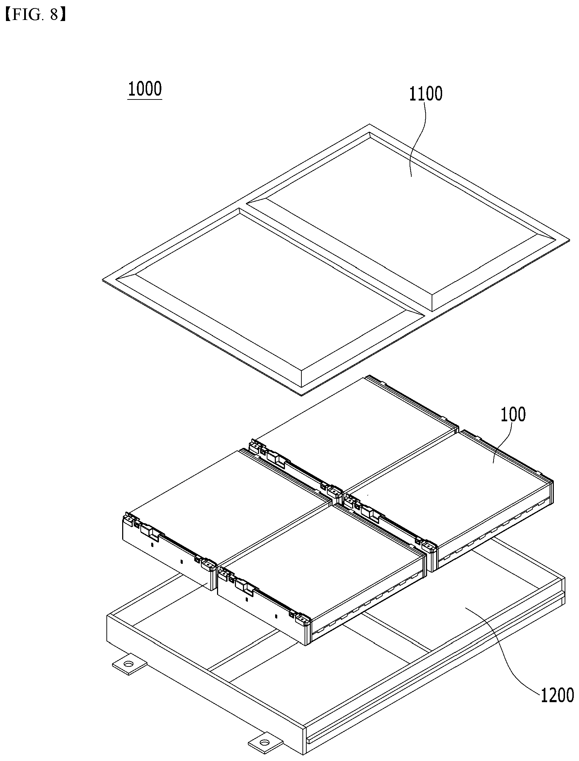

Next, a battery pack according to another embodiment of the present disclosure will be described with reference to Fig. 8.

Fig. 8 is an exploded perspective view of a battery pack according to yet another embodiment of the present disclosure.

Referring to Fig. 8, the battery pack 1000 according to the present embodiment is configured such that one or more of the battery modules described above can be packaged in a pack case to form the battery pack 1000. In particular, the battery modules can be packaged by the upper pack case 1100 and the lower pack case 1200 to form the battery pack 1000, and the battery pack may have a structure in which the battery modules are packed together with a battery management system (BMS) and a cooling device that control and manage battery's temperature, voltage, etc. At this time, since the battery pack according to the present embodiment includes a structure capable of absorbing and minimizing cell swelling, thereby improving stability.

The above-mentioned battery module or the battery pack including the same can be applied to various devices. For example, it can be applied to vehicle means such as an electric bike, an electric vehicle, and a hybrid electric vehicle, and may be applied to various devices capable of using the battery module or the battery pack including the same, without being limited thereto.

### [Description of Reference Numerals]

110: battery cell
120: battery cell stack
200: module frame
300: frame member
400: upper plate
500: sliding plate
600: connection member
700: shaft member
800: mounting part
1000: battery pack

## Claims

1. A battery module comprising:
a battery cell stack (120) in which a plurality of battery cells (110) are stacked;
a module frame (200) that houses the battery cell stack (120); and
a sliding plate (500, 510, 520) that is arranged between battery cells (110) adjacent to each other among the plurality of battery cells (110), wherein:
the sliding plate (500) comprises a first sliding plate (510) and a second sliding plate (520), and
the first sliding plate (510) and the second sliding plate (520) are formed so as to be spaced apart from each other between the battery cells (110) adjacent to each other,
the battery module further comprising:
shaft members (700, 710, 711, 712, 720, 721, 722) formed at an upper part and a lower part of the battery cell stack (120),
wherein the shaft member (700, 710, 711, 712, 720, 721, 722) is connected to an end part of the sliding plate (500, 510, 520), **characterized in that** an adhesive member is formed between the sliding plate (500) and the shaft member (700) for connecting the shaft member (700, 710, 711, 712, 720, 721, 722) to the end part of the sliding plate (500, 510, 520).

2. The battery module according to claim 1, comprising:
a connection member (600) formed between the first sliding plate (510) and the second sliding plate (520),
wherein the connection member (600) connects the first sliding plate (510) and the second sliding plate (520).

3. The battery module according to claim 2 wherein:
the connection member (600) comprises a spring member.

4. The battery module according to claim 2 wherein:
the connection member (600) is formed in plural numbers between the first sliding plate (510) and the second sliding plate (520).

5. The battery module according to one of the preceding claims wherein:
the module frame (200) comprises a frame member (300) that covers a lower part and both side surfaces of the battery cell stack (120), and an upper plate (400) that covers an upper part of the battery cell stack (120), and
the shaft member (700, 710, 711, 712, 720, 721, 722) is formed in parallel with the upper plate (400).

6. The battery module according to claim 5 wherein:
the shaft member (700, 710, 711, 712, 720, 721, 722) is formed in plural numbers,
the shaft member (700, 710, 711, 712, 720, 721, 722) is fixedly installed on each side surface part (300b) of the frame member (300), and
the shaft member (700, 710, 711, 712, 720, 721, 722) is connected to each of the first sliding plate (510) and the second sliding plate (520).

7. The battery module according to claim 6 wherein:
the shaft member (700) comprises a first shaft member (710, 711, 712) connected to the first sliding plate (510) and a second shaft member (720, 721, 722) connected to the second sliding plate (520).

8. The battery module according to claim 7 wherein:
the first shaft member (710) comprises a 1-1th shaft member (711) connected to an upper end part of the first sliding plate (510) and a 1-2th shaft member (712) connected to a lower end part of the first sliding plate (510), and
the second shaft member (720) comprises a 2-1th shaft member (721) connected to an upper end part of the second sliding plate (520) and a 2-2th shaft member (722) connected to a lower end part of the second sliding plate (520).

9. The battery module according to one of the preceding claims, comprising:
a mounting part (800) formed on a side surface part of the module frame (200).

10. The battery module according to claim 9 wherein:
the mounting part (800) is formed along the longitudinal direction of the battery cell (110).

11. The battery module according to claim 10, wherein:
the mounting part (800) is formed on the side surface part (300b) along the y-axis and -y-axis directions that are the longitudinal directions of the battery cell (110).

12. The battery module according to one of the preceding claims, wherein:
the battery cell (110) is a pouch-type battery cell.

13. The battery module according to one of the preceding claims, wherein: the battery cell (110) comprises a battery case (114) having a laminated structure of resin layer/metal thin film layer/resin layer.

14. A battery pack (1000) comprising the battery module according to claim 1.

## Patentansprüche

1. Ein Batteriemodul mit:
einen Batteriezellenstapel (120), in dem eine Vielzahl von Batteriezellen (110) gestapelt sind;
einen Modulrahmen (200), der den Batteriezellenstapel (120) aufnimmt; und
eine Gleitplatte (500, 510, 520), die zwischen aneinander angrenzenden Batteriezellen (110) der Vielzahl von Batteriezellen (110) angeordnet ist, wobei:
die Gleitplatte (500) eine erste Gleitplatte (510) und eine zweite Gleitplatte (520) umfasst, und
die erste Gleitplatte (510) und die zweite Gleitplatte (520) so ausgebildet sind, dass sie zwischen den aneinander angrenzenden Batteriezellen (110) voneinander beabstandet sind,
wobei das Batteriemodul ferner umfasst:
Wellenelemente (700, 710, 711, 712, 720, 721, 722), die an einem oberen Teil und einem unteren Teil des Batteriezellenstapels (120) ausgebildet sind,
wobei das Wellenelement (700, 710, 711, 712, 720, 721, 722) mit einem Endteil der Gleitplatte (500, 510, 520) verbunden ist, **dadurch gekennzeichnet, dass**
ein Klebeelement zwischen der Gleitplatte (500) und dem Wellenelement (700) ausgebildet ist, um das Wellenelement (700, 710, 711, 712, 720, 721, 722) mit dem Endteil der Gleitplatte (500, 510, 520) zu verbinden.

2. Batteriemodul nach Anspruch 1, umfassend:
ein Verbindungselement (600), das zwischen der ersten Gleitplatte (510) und der zweiten Gleitplatte (520) ausgebildet ist,
wobei das Verbindungselement (600) die erste Gleitplatte (510) und die zweite Gleitplatte (520) miteinander verbindet.

3. Batteriemodul nach Anspruch 2, wobei:
das Verbindungselement (600) ein Federelement umfasst.

4. Batteriemodul nach Anspruch 2, wobei:
das Verbindungselement (600) in mehrfacher Anzahl zwischen der ersten Gleitplatte (510) und der zweiten Gleitplatte (520) ausgebildet ist.

5. Batteriemodul nach einem der vorhergehenden Ansprüche, wobei:
der Modulrahmen (200) ein Rahmenelement (300) umfasst, das einen unteren Teil und beide Seitenflächen des Batteriezellenstapels (120) abdeckt, und eine obere Platte (400), die einen oberen Teil des Batteriezellenstapels (120) abdeckt, und
das Wellenelement (700, 710, 711, 712, 720, 721, 722) parallel zu der oberen Platte (400) ausgebildet ist.

6. Batteriemodul nach Anspruch 5, wobei:
das Wellenelement (700, 710, 711, 712, 720, 721, 722) in mehrfach ausgebildet ist,
das Wellenelement (700, 710, 711, 712, 720, 721, 722) fest auf jedem Seitenflächenteil (300b) des Rahmenelements (300) installiert ist, und
das Wellenelement (700, 710, 711, 712, 720, 721, 722) jeweils mit der ersten Gleitplatte (510) und der zweiten Gleitplatte (520) verbunden ist.

7. Batteriemodul nach Anspruch 6, wobei:
das Wellenelement (700) ein erstes Wellenelement (710, 711, 712) umfasst, das mit der ersten Gleitplatte (510) verbunden ist, und ein zweites Wellenelement (720, 721, 722), das mit der zweiten Gleitplatte (520) verbunden ist.

8. Batteriemodul nach Anspruch 7, wobei:
das erste Wellenelement (710) ein 1-1-tes Wellenelement (711) umfasst, das mit einem oberen Endteil der ersten Gleitplatte (510) verbunden ist, und ein 1-2-tes Wellenelement (712), das mit einem unteren Endteil der ersten Gleitplatte (510) verbunden ist, und
das zweite Wellenelement (720) ein 2-1-tes Wellenelement (721), das mit einem oberen Endteil der zweiten Gleitplatte (520) verbunden ist, und ein 2-2-tes Wellenelement (722), das mit einem unteren Endteil der zweiten Gleitplatte (520) verbunden ist, umfasst.

9. Batteriemodul nach einem der vorhergehenden Ansprüche, umfassend:
ein Befestigungsteil (800), das an einem Seitenflächenteil des Modulrahmens (200) ausgebildet ist.

10. Batteriemodul nach Anspruch 9, wobei:
das Befestigungsteil (800) entlang der Längsrichtung der Batteriezelle (110) ausgebildet ist.

11. Batteriemodul nach Anspruch 10, wobei:
das Befestigungsteil (800) an dem Seitenflächenteil (300b) entlang der y-Achsen- und -y-Achsen-Richtungen, die die Längsrichtungen der Batteriezelle (110) sind, ausgebildet ist.

12. Batteriemodul nach einem der vorhergehenden Ansprüche, wobei:
die Batteriezelle (110) eine Batteriezelle vom Pouch-Typ ist.

13. Batteriemodul nach einem der vorangehenden Ansprüche, wobei: die Batteriezelle (110) ein Batteriegehäuse (114) mit einer laminierten Struktur aus Harzschicht/Metalldünnfilmschicht/Harzschicht umfasst.

14. Batteriepack (1000) mit dem Batteriemodul nach Anspruch 1.

## Revendications

1. Module de batterie comprenant :
un empilement de cellules de batterie (120) dans lequel une pluralité de cellules de batterie (110) sont empilées ;
un châssis de module (200) contenant l'empilement de cellules de batterie (120) ; et
une plaque coulissante (500, 510, 520) agencée entre des cellules de batterie (110) adjacentes les unes aux autres parmi la pluralité de cellules de batterie (110),
la plaque coulissante (500) comprenant une première plaque coulissante (510) et une deuxième plaque coulissante (520), et
la première plaque coulissante (510) et la deuxième plaque coulissante (520) étant formées de manière à être espacées l'une de l'autre entre les cellules de batterie (110) adjacentes l'une à l'autre,
le module de batterie comprenant en outre :
des éléments d'arbre (700, 710, 711, 712, 720, 721, 722) formés sur une partie supérieure et une partie inférieure de l'empilement de cellules de batterie (120),
l'élément d'arbre (700, 710, 711, 712, 720, 721, 722) étant relié à une partie terminale de la plaque coulissante (500, 510, 520),
**caractérisé en ce qu'**un élément adhésif est formé entre la plaque coulissante (500) et l'élément d'arbre (700) pour relier l'élément d'arbre (700, 710, 711, 712, 720, 721, 722) à la partie terminale de la plaque coulissante (500, 510, 520).

2. Module de batterie selon la revendication 1, comprenant:
un élément de connexion (600) formé entre la première plaque coulissante (510) et la deuxième plaque coulissante (520),
l'élément de connexion (600) reliant la première plaque coulissante (510) à la deuxième plaque coulissante (520)

3. Module de batterie selon la revendication 2,
l'élément de connexion (600) comprenant un élément à ressort.

4. Module de batterie selon la revendication 2,
l'élément de connexion (600) comportant plusieurs éléments entre la première plaque coulissante (510) et la deuxième plaque coulissante (520).

5. Module de batterie selon une quelconque des revendications précédentes,
le cadre de module (200) comprenant un élément de cadre (300) couvrant une partie inférieure et les deux surfaces latérales de l'empilement de cellules de batterie (120), et une plaque supérieure (400) couvrant une partie supérieure de l'empilement de cellules de batterie (120), et
l'élément d'arbre (700, 710, 711, 712, 720, 721, 722) étant formé parallèlement à la plaque supérieure (400).

6. Module de batterie selon la revendication 5,
l'élément d'arbre (700, 710, 711, 712, 720, 721, 722) comportant plusieurs éléments,
l'élément d'arbre (700, 710, 711, 712, 720, 721, 722) étant installé solidement sur chaque partie de surface latérale (300b) de l'élément de cadre (300), et
l'élément d'arbre (700, 710, 711, 712, 720, 721, 722) étant raccordé à chacune de la première plaque coulissante (510) et de la deuxième plaque coulissante (520),

7. Module de batterie selon la revendication 6,
l'élément d'arbre (700) comprenant un premier élément d'arbre (710, 711, 712) relié à la première plaque coulissante (510) et un deuxième élément d'arbre (720, 721, 722) relié à la deuxième plaque coulissante (520).

8. Module de batterie selon la revendication 7,
le premier élément d'arbre (710) comprenant un 1-1^{ème} élément d'arbre (711) relié à une partie terminale supérieure de la première plaque coulissante (510) et un 1-2^{ème} élément d'arbre (712) relié à une partie terminale inférieure de la première plaque coulissante (510), et
le deuxième élément d'arbre (720) comprenant un 2-1^{ème} élément d'arbre (721) relié à une partie terminale supérieure de la deuxième plaque coulissante (520) et un 2-2^{ème} élément d'arbre (722) relié à une partie terminale inférieure de la deuxième plaque coulissante (520).

9. Module de batterie selon une quelconque des revendications précédentes, comprenant:
une pièce de montage (800) formée sur une partie de surface latérale du cadre du module (200).

10. Module de batterie selon la revendication 9,
la pièce de montage (800) étant formée dans le sens longitudinal de la cellule de batterie (110).

11. Module de batterie selon la revendication 10,
la pièce de montage (800) étant formée sur la partie de surface latérale (300B) dans le sens de l'axe y- et de l'axe -y-, qui sont les directions longitudinales de la cellule de batterie (110).

12. Module de batterie selon une des revendications précédentes,
la cellule de batterie (110) étant une cellule de batterie du type à poche.

13. Module de batterie selon une des revendications précédentes, la cellule de batterie (110) comprenant un boîtier de batterie (114) possédant une structure stratifiée à couche de résine/couche de film mince métallique /couche de résine.

14. Bloc-batterie (1000) comprenant le module de batterie selon la revendication 1.
